# EUROPEAN PATENT APPLICATION

(11) **EP 0 918 167 A1**
(43) Date of publication of application: **26.05.1999**
(21) Application number: 98309508.4
(22) Date of filing: 20.11.1998
(51) Int. Cl.: F16B 43/00, E06B 1/60, B23Q 3/18, A47J 36/34

(54) **Wedge**

(30) Priority: 20.11.1997 GB 9724596; 28.10.1998 GB 9823636
(71) Applicant: Szmidla, Andrew, London NW5 2LD (GB)
(72) Inventor: Szmidla, Andrew, London NW5 2LD (GB)
(74) Representative: Foster, Mark Charles

(57) **Abstract**

An improved wedge formed as a portion of a cylinder is disclosed. A surface of the cylinder portion is divided into a plurality of equal sectors 3, 4 and 5 and the surface of each sector is part of an ellipse with the same minor access as the radius of the cylinder. The plurality of part-elliptical plane surfaces 3, 4, 5 meet at the centre of the cylinder and each plane surface has a boundary on the periphery of the cylinder which starts a given distance below the point of meeting of the plurality of plane surfaces and rises to the same level above it.

## Description

This invention relates to an improved wedge which is preferably formed as a portion of a cylinder.

A conventional wedge has two inclined plane surfaces meeting along a line. When two such wedges having the same angle between their plane faces are placed together in opposite directions their outer surfaces are parallel and the separation of those surfaces can be adjusted by moving the wedges relative to each other at right-angles to the lines along which their plane surfaces meet. These conventional wedges have to be placed one upon the other with care and it may be difficult to maintain them in the desired relative position and one can be knocked sideways relative to the other if care is not taken.

The present invention provides an improved wedge formed as a portion of a cylinder or the like, the upper surface of the portion of the cylinder or the like being divided into a plurality of sectors and the upper surface of each sector being part of an ellipse with the same minor axis as the radius of at least part of the cylinder or the like. The plurality of part-elliptical plane surfaces may meet at the centre of the cylinder or the like and each plane surface has a boundary on the periphery of the cylinder or the like which starts a given distance below the point of meeting of the plurality of plane surfaces and rises to the same level above it.

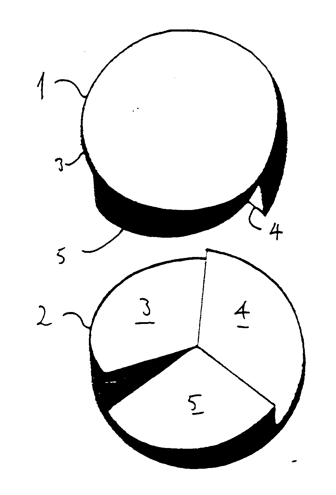

For a better understanding of the present invention, an embodiment will now be described with reference to the accompanying drawing, the single figure of which shows two wedges placed with their operative surfaces facing.

The wedges 1 and 2 are identical in configuration. Each wedge comprises three plane surfaces 3, 4 and 5.

When the wedges 1 and 2 are orientated as illustrated in the figure, the wedges may be fitted together so that the plane surfaces 3, 4 and 5 of the respective wedges 1 and 2 are completely in contact with one another at their peripheries. This represents the minimum separation between the wedges 1 and 2. In this configuration the wedges 1 and 2 form a cylinder.

Relative rotation between wedge 1 and wedge 2 about the central axis of the cylinder varies the separation of the plane surfaces 3, 4 and 5 of the respective wedges 1 and 2. With increased relative rotation, only a decreasing fraction of the plane surfaces 3, 4 and 5 of the respective wedges engage one another.

Such a pair of wedges 1 and 2 made of thermally conducting material, such as metal, can be put to good use to provide a variable thermally conducting device. At minimum separation of the wedges 1 and 2, maximum conductance is provided since there is a relatively small air gap between the two wedges 1 and 2. As the separation is increased, the thermal conductance between the two wedges 1 and 2 will be reduced in relation to the angle of relative twisting between the two wedges 1 and 2, dropping to a minimum when only a small edge region at the highest boundaries of the individual plane surfaces 3, 4 and 5 are in contact.

In order to ensure that, once the wedges 1 and 2 have been placed relative to each other at a certain angle of relative rotation, they do not change that angle, a high friction region or teeth may be provided, for example around the periphery of the surfaces 3, 4 and 5, to prevent the wedges 1 and 2 twisting relative to each other under the weight of an object supported by them. A handle may be provided on each wedge 1 and 2 to adjust the relative rotation.

The simplest form of rotatable wedge has a plane circular under surface and its upper surface formed by the plurality of inclined surfaces arranged symmetrically about the axis of the cylinder. When a pair of such wedges are used together, their inclined surfaces will be in contact at their peripheries and the outer surfaces of the pair will be plane and parallel. It would be possible to form a series of such pairs, in which case the wedges of two adjacent pairs whose plane surfaces are in contact might be formed as an integral piece with inclined surfaces at both ends of the generally cylindrical shape.

The arrangements of multiple wedges described above would find a use in adjusting to a horizontal level any object such as a domestic or industrial appliance, or item of household furniture, or piece of laboratory equipment, if it were supported by three or more such rotatable wedges.

Another version could be used, as a sacrificial device to wedge in position any item, such as a door or window frame, within an opening for which it destined, prior to final fixing.

One or more pairs of wedges 1 and 2 can be used for controlling the cooking process on the hot plate of a cooker such as an Aga, where the temperature of the hot plate is not adjustable. For example, one or more pairs of wedges could be placed on the hot plate. For maximum heating, the wedges 1 and 2 would be rotated relative to each other so that the plane surfaces 3, 4 and 5 of the respective wedges 1 and 2 are in maximum contact with one another. A saucepan is then placed on the flat uppermost surface of wedge 1. The heating of the contents of the saucepan can then be adjusted by relative rotation between wedges 1 and 2 in order to control the cooking process.

## Claims

1. A wedge formed as a portion of a cylinder or the like, the upper surface of the portion of the cylinder or the like being divided into a plurality of sectors and the upper surface of each sector being part of an ellipse with the same minor axis as the radius of at least part of the cylinder or the like.

2. A wedge is claimed in claim 1, wherein each of the plurality of sectors is the same.

3. A wedge is claimed in claim 1 or 2, wherein the wedge comprises three sectors.

4. A wedge is claimed in claim 1, 2 or 3, wherein the plurality of part-elliptical plane surfaces meet at the centre of the cylinder or the like and each plane surface has a boundary on the periphery of the cylinder which starts a given distance below the point of meeting of the plurality of plane surfaces and rises to the same level above it.

5. A wedge is claimed in any one of the preceding claims, wherein the wedge is formed of a thermally conducting material such as metal.

6. A wedge is claimed in any one of the preceding claims, wherein a high friction region is provided on at least one of the plane surfaces.

7. A wedge is claimed in any one of the preceding claims, wherein a tooth or a plurality of teeth is/are provided on at least one of the plane surfaces.

8. A wedge device comprising two parts configured for relative rotation about an axis, the arrangement being such that relative rotation of said two parts adjusts the area of contact between said two parts.

9. A wedge device claimed in claim 8, wherein at least one of said two parts is a wedge as claimed in any one of claims 1 to 7.

10. A height adjustment device, heat conduction adjusting device or cooking aid comprising a wedge or wedge device as claimed in any one of the preceding claims.
